# EUROPÄISCHE PATENTSCHRIFT

(11) **EP 2 705 774 B1**
(45) Veröffentlichungstag und Bekanntmachung des Hinweises auf die Patenterteilung: **08.03.2017**
(21) Anmeldenummer: 13180238.1
(22) Anmeldetag: 13.08.2013
(51) Int. Cl.: A47B 9/00, A61G 13/10, A61G 12/00, A47B 9/20, F16L 3/12

(54) **Vorrichtung zum Bereitstellen einer elektrischen oder fluiden Anschlussstelle**
Device for providing a connection point for electricity or liquid
Dispositif de préparation d'un point de raccordement électrique ou fluidique

(30) Priorität: 06.09.2012 DE 102012215851
(43) Veröffentlichungstag der Anmeldung: 12.03.2014
(73) Patentinhaber: Aktiebolaget SKF, 415 50 Göteborg (SE)
(72) Erfinder: Drügemöller, Andreas, 97456 Dittelbrunn (DE); Panzer, Hans-Peter, 79540 Lörrach (DE); Voegelin, Martin, 4434 Hölstein (CH)
(74) Vertreter: Schonecke, Mitja

(56) Entgegenhaltungen:
- WO-A2-2011/063812
- DE-A1-102010 046 769

## Beschreibung

Ausführungsbeispiele beziehen sich auf eine Vorrichtung zum Bereitstellen eines elektrischen oder fluiden Anschlusses und insbesondere auf säulenförmige Bauteile mit Hohlprofil und eine damit verbindbare Vorrichtung zum Bereitstellen einer elektrischen oder fluiden Anschlussstelle, wie es beispielsweise bei Hubsäulen wünschenswert ist.

Hubsäulen, die auch Teleskopsäulen oder Teleskopantriebe genannt werden, werden in einer Vielzahl technischer Gebiete eingesetzt. Zu diesen zählen unter anderem Patientenliegen, Behindertenstühle, aber auch andere medizinische Anwendungen. Ebenso werden sie jedoch auch außerhalb des medizinischen Sektors eingesetzt, beispielsweise um Maschinenteile oder andere Komponenten entlang einer Bewegungsrichtung verfahren zu können.

Allgemein ist es bei säulenartigen Strukturen, wie z. B. Tischbeinen, tragenden Säulen oder Hubsäulen, wünschenswert, Zugang zu elektrischen Anschlüssen zu haben, da sich bei diesen Elementen die weitere Verkabelung im Inneren der Säule führen lässt. Manchmal wird von Nutzern ein Zugang zu einem Stecker oder allgemein einem elektrischen Anschluss auf der Seite einer Säule benötigt. Diese Stecker sind dann in den Hohlprofilabschnitt der Säule integriert. Die zusätzlichen Stecker benötigen eine Nachbearbeitung oder Überarbeitung (der Säule) durch Maschineneinsatz und die Varianz von unterschiedlichen Komponenten in der Fertigungsstraße nimmt zu. Ferner muss der Bedarf jedes Steckers zum Zeitpunkt der Bestellung der Säule spezifiziert werden. In anderen Worten, bei bekannten Systemen sind Stecker, die von der Seite zugänglich sind, in das Profil der Säulen integriert. Das heißt, dass der Hohlprofilabschnitt bearbeitet werden muss. Nachdem die Säule fertig gestellt ist, gibt es keine Möglichkeit mehr, einen Stecker, der von außen zugänglich ist, hinzuzufügen.

Die WO 2011/063812 A2 bezieht sich auf eine teleskopische Hebesäule, wie sie beispielsweise für Möbel in Form höhenverstellbarer Tische und Betten eingesetzt werden kann. Sie umfasst mindestens zwei gegenseitige Teleskopelemente und eine elektrische Antriebseinheit zum Einstellen der Teleskopelemente. Sie umfasst ferner eine Teleskopkabelführungseinrichtung zur Führung wenigstens eines elektrischen Kabels, wobei die Teleskopkabelführungseinrichtung sich zwischen dem unteren und dem oberen Ende der Hebesäule erstreckt und mit dieser verbunden ist, sodass die Teleskopleitungsführungsvorrichtung in der Teleskopverstellung der Hebesäule arbeitet, um die Kabel in geschützten Art und Weise zu führen.

Es besteht daher ein Bedarf, ein Konzept zu schaffen, das es ermöglicht, säulenförmige Bauteile mit hoher Flexibilität mit elektrischen oder fluiden Anschlüssen auszustatten.

Diesem Bedarf trägt eine Hubsäule gemäß Anspruch 1 Rechnung.

Eine Vorrichtung zum Bereitstellen einer elektrischen oder fluiden Anschlussstelle gemäß einem Ausführungsbeispiel umfasst eine Verbindungsstruktur und eine Anschlussstruktur. Die Verbindungsstruktur ist ausgebildet, sodass sie mit einem Ende eines säulenförmigen Bauteils mit Hohlprofil verbindbar ist. Ferner ist die Anschlussstruktur mit der Verbindungsstruktur verbunden und weist zumindest eine Öffnung zum Bereitstellen eines elektrischen oder fluiden Anschlusses für einen externen Stecker und eine weitere Öffnung zum Durchführen einer von dem elektrischen oder fluiden Anschluss in das säulenförmige Bauteil führenden Leitung auf.

Einer Vorrichtung zum Bereitstellen einer elektrischen oder fluiden Anschlussstelle gemäß einem Ausführungsbeispiel liegt die Erkenntnis zugrunde, dass es auf einfache Art und Weise möglich ist, an den Enden eines säulenförmigen Bauteils eine Anschlussstruktur über eine Verbindungsstruktur an dem säulenförmigen Bauteil zu befestigen, um so die Möglichkeit zu bieten, eine beliebige Anzahl und Art von elektrischen oder fluiden Anschlussmöglichkeiten über die Anschlussstruktur bereitzustellen. Unabhängig von der Art und Anzahl der elektrischen oder fluiden Anschlussmöglichkeiten, kann das säulenförmige Bauteil beispielsweise immer gleich aussehen und benötigt dadurch nicht unterschiedliche Bearbeitungsprozesse, wie bei der Integration von Anschlüssen im rohrförmigen Teil der Säule. Ferner kann über die Durchführungsöffnung mit der von dem elektrischen oder fluiden Anschluss weg führenden Leitung am Ende der Säule das Innere der Säule einfach erreicht werden, um die Leitung von außen unsichtbar im Inneren der Säule weiterzuführen.

Eine Vorrichtung zum Bereitstellen einer elektrischen oder fluiden Anschlussstelle nach dem beschriebenen Prinzip kann an einem oder auch an beiden Enden des säulenförmigen Bauteils angeordnet und eine beliebige Anzahl und beliebige Art von elektrischen oder fluiden Anschlüssen zur Verfügung stellen. Dadurch kann eine hohe Flexibilität zur Bereitstellung von elektrischen oder fluiden Anschlüssen bei säulenförmigen Bauteilen gewährleistet werden. Zusätzlich können die Herstellungskosten für säulenförmige Bauteile deutlich reduziert werden, da ein einheitlicher Herstellungsprozess ermöglicht werden kann.

Durch eine Vorrichtung nach dem beschriebenen Konzept können ein oder mehrere zusätzliche elektrische oder fluiden Anschlüsse (z. B. Steckdosen oder Stecker) als Zubehör zur Säule hinzugefügt werden. Dieses Zubehör kann auch nach seinem Herstellungsprozess auf beiden Seiten (Enden) der Säule hinzugefügt werden. Die Vorrichtung zum Bereitstellen einer elektrischen oder fluiden Anschlussstelle (oder auch kurz Anschlussvorrichtung genannt) kann vom Nutzer auch nachbestellt werden, wenn ein Anschluss während der Lebenszeit der Säule notwendig ist.

Bei einigen Ausführungsbeispielen ist die Verbindungsstruktur im Wesentlichen plattenförmig und mit einem Teil eines Randes der Platte mit der Anschlussstruktur verbunden. Die Anschlussstruktur erstreckt sich nur in einen der beiden durch eine dem säulenförmigen Bauteil abgewandte Plattenebene der Verbindungsstruktur definierten Halbräume, so dass in den dem säulenförmigen Bauteil abgewandten Halbraum kein Teil der Vorrichtung hinein ragt. So kann die Verbindungsstruktur einen ebenen Abschluss des säulenförmigen Bauteils bilden, sodass an diesem Ende z. B. eine Tischplatte oder ein anderes zu tragendes Bauteil auf der Säule befestigt werden kann, ohne dass die Vorrichtung zum Bereitstellen der elektrischen oder fluiden Anschlussstelle im Weg wäre.

Bei einigen weiteren Ausführungsbeispielen weist die Verbindungsstruktur zumindest teilweise abgewinkelte Ränder auf, sodass die Vorrichtung durch die abgewinkelten Ränder zumindest in einer Bewegungsrichtung in seiner Position an dem Ende des säulenförmigen Bauteils gehalten wird, wenn die Vorrichtung über die Verbindungsstruktur mit dem säulenförmigen Bauteil verbunden ist. Durch die abgewinkelten Ränder kann beispielsweise die Montage deutlich erleichtert werden. Alternativ kann die Vorrichtung auch durch Stifte oder ähnliches in Öffnungen eines Abschlussteils positioniert werden.

Einige Ausführungsbeispiele beziehen sich auf eine Hubsäule mit einer Vorrichtung zum Bereitstellen einer elektrischen oder fluiden Anschlussstelle nach dem beschriebenen Konzept. Die Hubsäule entspricht dabei dem säulenförmigen Bauteil mit Hohlprofil und die Vorrichtung ist über die Verbindungsstruktur mit einem Ende der Hubsäule verbunden, sodass sich die Anschlussstruktur an einer Seitenfläche der Hubsäule befindet und sich in Richtung des anderen Endes der Hubsäule erstreckt.

Einige Ausführungsbeispiele werden nachfolgend, Bezug nehmend auf die beiliegenden Figuren, näher erläutert. Es zeigen:
- Fig. 1: eine schematische dreidimensionale Ansicht einer Vorrichtung zum Bereitstellen einer elektrischen oder fluiden Anschlussstelle nach Verbinden mit einem säulenförmigen Bauteil;
- Fig. 2: eine schematische Seitenansicht einer Vorrichtung zum Bereitstellen einer elektri sehen Anschlussstelle und eines säulenförmigen Bauteils vor dem Verbinden; und
- Fig. 3: eine schematische Seitenansicht einer Vorrichtung zum Bereitstellen einer elektri sehen Anschlussstelle und eines säulenförmigen Bauteils nach dem Verbinden.

Im Folgenden können bei unterschiedlichen, beschriebenen Ausführungsbeispielen teilweise für Objekte und Funktionseinheiten, die gleiche oder ähnliche funktionelle Eigenschaften aufweisen, gleiche Bezugszeichen verwendet werden. Ferner können zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Des Weiteren können optionale Merkmale der verschiedenen Ausführungsbeispiele miteinander kombinierbar oder zueinander austauschbar sein.

Eine fluide Anschlussstelle oder ein fluider Anschluss ist eine Anschlussstelle für ein fluides Medium, also eine Flüssigkeit oder eine Gas. Beispielsweise kann es sich dabei um einen Druckluftanschluss oder einen Wasseranschluss handeln. Im Folgenden werden die Ausführungsbeispiele in Zusammenhang mit einer Vorrichtung zum Bereitstellen einer elektrischen Anschlussstelle beschrieben. Es ist jedoch klar, dass die gemachten Ausführungen in entsprechender Weise ebenso für eine Vorrichtung zum Bereitstellen einer fluiden Anschlussstelle anwendbar sind. Beispielsweise ist die Öffnung zum Durchführen einer Leitung im Fall eines elektrischen Anschlusses eine Öffnung zum Durchführen eines Kabels und im Fall eines fluiden Anschlusses z.B. eine Öffnung zum Durchführen eines Schlauchs für eine Flüssigkeit oder ein Gas.

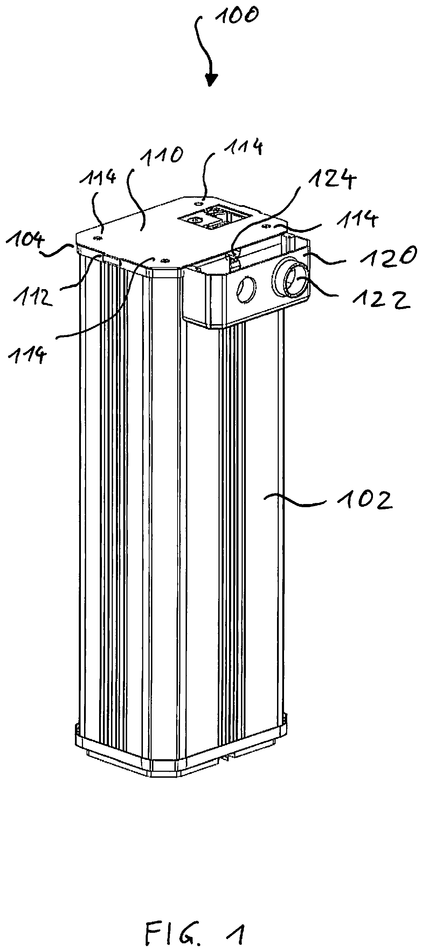

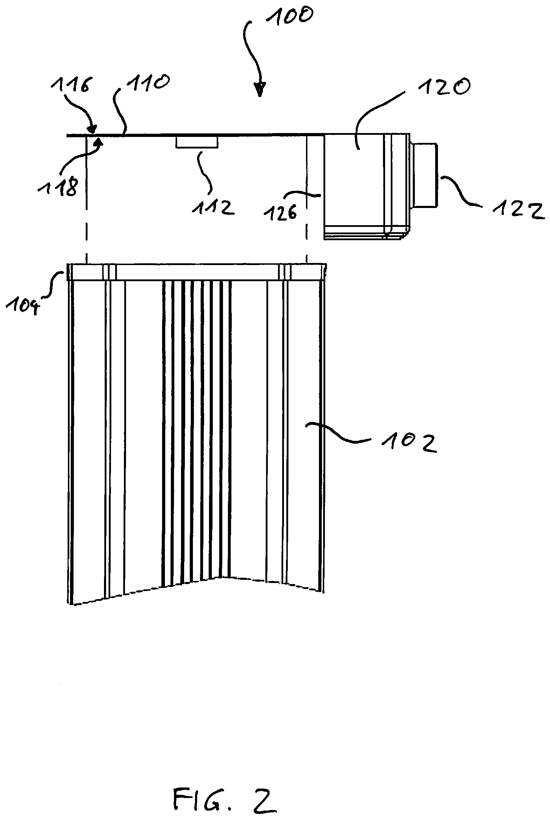

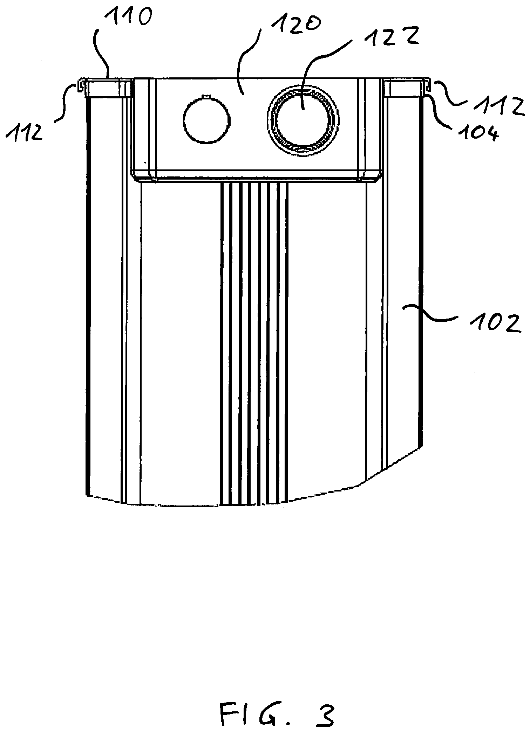

Die Fig. 1 - 3 zeigen eine Vorrichtung 100 zum Bereitstellen einer elektrischen Anschlussstelle gemäß einem Ausführungsbeispiel in unterschiedlichen Ansichten. Die Vorrichtung 100 umfasst eine Verbindungsstruktur 110 und eine Anschlussstruktur 120. Die Verbindungsstruktur 110 ist mit einem Ende eines säulenförmigen Bauteils 102 mit Hohlprofil verbindbar. Die Anschlussstruktur 120 ist mit der Verbindungsstruktur 110 verbunden und weist zumindest eine Öffnung 122 zum Bereitstellen eines elektrischen Anschlusses für einen externen Stecker und eine weitere Öffnung 124 zum Durchführen eines von dem elektrischen Anschluss in das säulenförmige Bauteil 102 führendes Kabels auf.

Durch die Möglichkeit, die Vorrichtung 100 über die Verbindungsstruktur mit einem Ende eines säulenförmigen Bauteils 102 zu verbinden, kann in einfacher Weise eine Möglichkeit zur Bereitstellung elektrischer Anschlüsse realisiert werden, ohne dass das säulenförmige Bauteil 102 in seiner Struktur verändert oder nachbearbeitet werden muss. Die Vorrichtung 100 kann wie ein Zubehör an einem oder beiden Enden des säulenförmigen Bauteils 102 befestigt werden. Über die Öffnung 124 zum Durchführen eines Kabels kann eine von außen unsichtbare Kabelführung von einem elektrischen Anschluss in der Anschlussstruktur 120 bis zum andere Ende des säulenförmigen Bauteils 102 und von dort in einen Kabelkanal, ein weiteres Bauteil oder auch einfach an eine Wandsteckdose geführt werden. Die Verbindung kann direkt bei der Herstellung oder nach Herstellung des säulenförmigen Bauteils 102 erfolgen oder auch erst später beim Benutzer. Ferner kann in die Anschlussstruktur 120 eine beliebige Anzahl und/oder Art von elektrischen Anschlüssen integriert werden, sodass insgesamt eine hohe Flexibilität der Bereitstellung eines oder mehrerer elektrischer Anschlussstellen gewährleistet werden kann.

Die Verbindungsstruktur 110 kann mit dem Ende des säulenförmigen Bauteils 102 durch einfaches Aufsetzen auf das Abschlussteils 104 oder allgemein die Öffnung des Hohlprofils und/oder passende Rastverbindungen oder über Verbindungsmittel, wie z. B. Schrauben, Nieten oder Nägel, verbunden werden.

Ein säulenförmiges Bauteil 102 mit Hohlprofil kann jegliche Art von länglichem Bauteil (Bauteil, das in einer Richtung eine deutlich größere Ausdehnung (z.B. mehr als das zweifache, fünffache, zehnfache oder mehr) als in den beiden anderen Richtungen aufweist) sein, das in seiner Längsrichtung zwischen den beiden Enden einen durchgehenden Hohlraum aufweist. Dieser Hohlraum kann zwischen den beiden Enden des säulenförmigen Bauteils einen konstanten Querschnitt (z.B. quadratisch oder rechteckig) aufweisen, kann jedoch auch (z. B. aufgrund von Innenverstrebungen oder anderen konstruktiven Maßnahmen) einen variablen Querschnitt aufweisen. Da jedoch z.B. zumindest ein Kabel im Inneren geführt werden soll, ist der Querschnitt des Hohlraums größer als der Durchmesser eines Kabels. Die Außenkontur eines Querschnitts (Querschnitt orthogonal zur Längsachse) kann über die Länge des säulenförmigen Bauteils 102 variieren. Zum Beispiel kann sich der Querschnitt von einem am Boden zu befestigenden Ende des säulenförmigen Bauteils 102 zu einem gegenüberliegenden Ende verjüngen oder aber auch aus Designgründen in seiner Grundform variieren (z. B. von einem quadratischen Querschnitt an einem Ende zu einem runden Querschnitt in der Mitte und wieder zu einem quadratischen Querschnitt an seinem anderen Ende variieren). Alternativ kann der Querschnitt aber auch über einen Großteil der Länge des säulenförmigen Bauteils 102 (z. B. mehr als die Hälfte der Länge, mehr als 80 % der Länge oder mehr) konstant sein, sodass das säulenförmige Bauteil 102 kostengünstig herstellbar ist.

Die Anschlussstruktur 120 weist zumindest zwei Öffnungen 122, 124 auf. Die eine Öffnung 122 dient zum Bereitstellen eines elektrischen Anschlusses für einen externen Stecker. Das heißt, die Öffnung 122 ist ausgelegt, um einen für den jeweiligen Stecker entsprechenden Anschluss zu ermöglichen. Dabei kann die Größe und Form der Öffnung 122 je nach Art des Steckers oder des gewünschten elektrischen Anschlusses variieren. Die weitere Öffnung 124 dient zum Durchführen zumindest eines Kabels, das von dem elektrischen Anschluss in das säulenförmige Bauteil 102 führt und danach in dem säulenförmigen Bauteil 102 weitergeführt werden kann. Die weitere Öffnung 124 kann eine unterschiedliche Form und Größe aufweisen. Die Größe der Öffnung kann sich beispielsweise nach der Menge der bereitgestellten elektrischen Anschlüsse und nach Art der Anschlüsse sowie der dafür notwendigen Verbindungskabel richten.

Die Anschlussstruktur 120 stellt beispielsweise eine Art Gehäuse dar, in welchem von außen zugängliche elektrische Anschlüsse untergebracht sind, deren Kabel über eine zusätzliche Öffnung 124 in das säulenförmige Bauteil 102 geführt werden können. Dazu können beispielsweise die Öffnung 122 zum Bereitstellen eines elektrischen Anschlusses und die weitere Öffnung 124 zum Durchführen eines Kabels an zwei unterschiedlichen Seiten der Anschlussstruktur 120 (z. B. an zwei gegenüberliegenden Seiten) angeordnet sein.

Die Fig. 1 - 3 zeigen ein konkretes Beispiel für eine Vorrichtung zum Bereitstellen einer elektrischen Anschlussstelle, das viele optionale alternative oder zusätzliche Details zeigt, wie z. B. abgewinkelte Ränder 112 der Verbindungsstruktur 110, Löcher 114 in der Verbindungsstruktur 110, eine zusätzliche Öffnung für einen weiteren elektrischen Anschluss, die genaue Form der Verbindungsstruktur 110 und der Anschlussstruktur 120 oder auch Details des Profils des säulenförmigen Bauteils 102, die jedoch die Allgemeinheit des beschriebenen Konzepts nicht einschränken sollen.

Der elektrische Anschluss und das in das säulenförmige Bauteil 102 führende Kabel können nachträglich vom Nutzer eingebaut werden. Dadurch kann der Nutzer individuell festlegen, welche Art von elektrischem Anschluss er benötigt und diesen einbauen. Alternativ kann ein oder mehrere elektrische Anschlüsse mit oder ohne zugehörigem Kabel bereits fertig in den Öffnungen der Vorrichtung 100 zum Bereitstellen einer elektrischen Anschlussstelle integriert sein und somit Teil der Vorrichtung 100 sein. Ebenso kann die Vorrichtung 100 bereits mit dem säulenförmigen Bauteil 102 verbunden sein, sodass dieses auch Teil der Vorrichtung 100 sein kann und das Ganze als fertiges säulenförmiges Bauteil mit zumindest einer elektrischen Anschlussstelle an den Nutzer ausgeliefert werden kann. Alternativ kann der Nutzer selbst auch bestehende Systeme mit einer Vorrichtung 100 zum Bereitstellen einer elektrischen Anschlussstelle nachrüsten.

Der elektrische Anschluss kann beispielsweise ein Stromanschluss, ein Netzwerkanschluss, ein Steueranschluss, ein Ausgang, ein Eingang, allgemein eine Anschlussvorrichtung, ein Betriebsstecker eines zusätzlichen Zubehörs oder ein Telefonanschluss sein.

Die Verbindungsstruktur 110 kann beispielsweise im Wesentlichen plattenförmig sein. Dabei ist unter plattenförmig eine Struktur zu verstehen, die in zwei Ausdehnungsrichtungen deutlich größer (mehr als zweimal, mehr als fünf Mal, mehr als zehn Mal so groß oder mehr) als in seiner dritten Ausdehnungsrichtung (welche die Dicke der Platte darstellt) ist. Ferner kann die plattenförmige Struktur eine im Wesentlichen konstante Dicke (z. B. abgesehen von Fertigungs- und Messtoleranzen) aufweisen. Z.B. ist eine Struktur im Wesentlichen plattenförmige, wenn die plattenförmige Struktur auch Ausnehmungen und Löchern oder von der Plattenform abweichende Strukturen an den Rändern des plattenförmigen Teils aufweisen kann. Die Verbindungsstruktur 110 kann gleich dick, aber auch deutlich dünner (weniger als halb so dick, weniger als ein Viertel oder weniger als ein Zehntel) sein als eine Ausdehnung der Anschlussstruktur 120 in Richtung der Längsachse des säulenförmigen Bauteils 102. In anderen Worten, die Verbindungsstruktur 110 kann beispielsweise beidseitig plan mit der Anschlussstruktur 120 abschließen oder nur auf der dem säulenförmigen Bauteil abgewandten Seite plan mit der Anschlussstruktur 120 abschließen. Die Verbindungsstruktur 110 kann auch die gleiche Form wie das säulenförmige Bauteil 102 aufweisen.

Die Ränder 112 der Verbindungsstruktur 110 können optional oder zusätzlich zumindest teilweise abgewinkelt sein. Durch die abgewinkelten Ränder 112 kann die Vorrichtung 100 z.B. zumindest in einer Bewegungsrichtung (parallel zu der Plattenebene) in seiner Position an dem Ende des säulenförmigen Bauteils 102 gehalten werden, wenn die Vorrichtung 100 über die Verbindungsstruktur 110 mit dem säulenförmigen Bauteil 102 verbunden ist.

Die Verbindungsstruktur 110 ist beispielsweise über einen Teil des Randes der Platte mit der Anschlussstruktur 120 verbunden. Die Verbindung kann beispielsweise eine starre Verbindung sein, sodass Kräfte in allen Richtungen von der Anschlussstruktur 120 auf die Verbindungsstruktur 110 und umgekehrt übertragen werden können.

Um einen einseitig freien Bauraum zu ermöglichen, kann sich die Anschlussstruktur 120 z. B. nur in einen der beiden Halbräume erstrecken, die durch eine dem säulenförmigen Bauteil 102 abgewandte Plattenebene 116 der Verbindungsstruktur 110 (abgewandte Seite der Verbindungsstruktur) definiert sind. Dadurch ragt kein Teil der Vorrichtung 100 in den dem säulenförmigen Bauteil 102 abgewandten Halbraum. In anderen Worten, die Anschlussstruktur 120 kann so ausgebildet sein, dass sie nur auf einer Seite über die durch die Platte der Verbindungsstruktur 110 gebildete Ebene hinaus ragt und die andere Seite frei bleibt. Dadurch können zu tragende Bauteile, wie z. B. eine Tischplatte, an dem mit der Vorrichtung 100 verbundenen Ende des säulenförmigen Bauteils 102 montiert werden, ohne dass die Anschlussstruktur 120 im Weg wäre.

Zusätzlich oder optional kann die Anschlussstruktur 120 beispielsweise eine Seitenfläche 126 aufweisen, die mit einer der zuvor definierten Plattenebene 116 abgewandten Plattenseite 118 der Verbindungsstruktur 110 einen Winkel zwischen 80 Grad und 100 Grad, insbesondere 90 Grad, einschließt. Dadurch kann durch die Verbindungsstruktur 110 und die Seitenfläche 126 der Anschlussstruktur 120 ein L-förmiges Profil gebildet werden. Beim Verbinden mit dem säulenförmigen Bauteil 102 kann die plattenförmige Verbindungsstruktur 110 dann zumindest teilweise die Öffnung des Hohlprofils des säulenförmigen Bauteils 102 abdecken und die Anschlussstruktur 120 mit seiner Seitenfläche 126 an einer Seitenfläche des säulenförmigen Bauteils 102 anliegen, sodass die Anschlussstruktur 120 an dem säulenförmigen Bauteil 102 auch bei Belastung durch verbundene externe Stecker stabil befestigt ist.

Wie bereits erwähnt, kann die Verbindungsstruktur 110 die Öffnung des Hohlprofils des säulenförmigen Bauteils 102 an dem Ende des säulenförmigen Bauteils 102 zumindest teilweise abdecken. Insofern kann die Verbindungsstruktur 110 im eingebauten Zustand ein Zwischenstück zwischen dem säulenförmigen Bauteil 102 und einem von dem säulenförmigen Bauteil 102 zu tragenden Bauteil sein. Dabei kann die Verbindungsstruktur 110 beispielsweise eine Kontur aufweisen, die im Wesentlichen einem Querschnitt des säulenförmigen Bauteils 102 entspricht, um im eingebauten Zustand als Zwischenstück verwendet werden zu können. Mit der Kontur ist damit beispielsweise bei einer plattenförmigen Verbindungsstruktur 110 die von den Außenrändern der Platte gebildete Geometrie gemeint. Zum Beispiel kann die Kontur der Verbindungsstruktur 110 im Wesentlichen rechteckig sein, wenn das säulenförmige Bauteil 102 im Wesentlichen einen rechteckigen Querschnitt hat. Im Beispiel von Fig. 1 ist eine Variante gezeigt, bei der eine plattenförmige Verbindungsstruktur 110 eine im Wesentlichen rechteckige Kontur mit abgeschrägten Ecken aufweist, die zu dem im Wesentlichen rechteckigen Querschnitt mit abgeschrägten Ecken des säulenförmigen Bauteils 102 passt. Dabei ist beispielsweise unter einer Kontur, die im Wesentlichen einem Querschnitt entspricht, gemeint, dass die Kontur der Verbindungsstruktur 110 von dem Außenquerschnitt des säulenförmigen Bauteils 102 einen maximalen Abstand aufweist, der kleiner als 10 % (oder 20 %, 5 % oder weniger) einer maximalen Querschnittbreite des säulenförmigen Bauteils 102 ist.

Optional oder zusätzlich kann die Verbindungsstruktur 110 Löcher 114 aufweisen, sodass ein zu tragendes Bauteil mit dem säulenförmigen Bauteil 102 mit Hilfe von durch die Löcher 114 in der Verbindungsstruktur 110 führende Verbindungsmittel verbindbar ist. Als Verbindungsmittel können beispielsweise Schrauben, Nieten oder Nägel verwendet werden.

Die Verbindungsstruktur 110 und die Anschlussstruktur 120 können aus dem gleichen Material oder aus unterschiedlichen Materialien gefertigt sein. Beispielsweise können die Verbindungsstruktur 110 und die Anschlussstruktur 120 als einstückiges Kunststoffteil ausgebildet sein. Alternativ kann die Verbindungsstruktur 110 z. B. ein gestanztes Metallblech und die Anschlussstruktur 120 ein mit dem gestanzten Metallblech verbundenes Kunststoffteil sein.

Das säulenförmige Bauteil 102 kann beispielsweise ein Metallhohlprofil (z.B. ein Aluminiumhohlprofil) oder ein Kunststoffliohlprofil sein. Optional oder zusätzlich kann das Hohlprofil an einem oder beiden Enden ein Abschlussteil 104 (z. B. aus Kunststoff) aufweisen, das die Führung von Kabeln oder die Anordnung von Platinen in dem Hohlprofil des säulenförmigen Bauteils 102 erleichtert oder ermöglicht, wie es z. B. in den Fig. 1 - 3 gezeigt ist, oder einen scharfkantigen Abschluss des Hohlprofils abdecken soll. Die Vorrichtung 100 kann über die Verbindungsstruktur 110 direkt mit dem Hohlprofil oder mit dem Abschlussteil 104 des säulenförmigen Bauteils 102 verbunden sein.

Einige Ausführungsbeispiele beziehen sich auf eine Hubsäule mit einer Vorrichtung zum Bereitstellen einer elektrischen Anschlussstelle gemäß dem zuvor beschriebenen Konzept. Die Hubsäule entspricht dabei dem säulenförmigen Bauteil 102 mit Hohlprofil und die Vorrichtung 100 ist über die Verbindungsstruktur 110 mit einem Ende der Hubsäule verbunden, sodass sich die Anschlussstruktur 120 an einer Seitenfläche der Hubsäule befindet und sich in Richtung des anderen Endes der Hubsäule erstreckt, so wie es auch in dem Beispiel in den Fig. 1 - 3 gezeigt ist.

Hubsäulen umfassen im Allgemeinen wenigstens zwei rohrförmige oder säulenförmige Komponenten, die ineinander entlang der Bewegungsrichtung einschiebbar und somit verfahrbar sind. Dadurch kann die Länge der Hubsäule manuell oder elektrisch verstellt werden.

Durch die Veränderung der Länge der Hubsäule kann beispielsweise ein von der Hubsäule getragenes Bauteil (z. B. eine Tischplatte oder eine Patientenliege) in ihrer Höhe über dem Boden verändert werden.

Die Hubsäule kann beispielsweise für Labortische, Patientenliegen, Behindertenstühle oder allgemein für Anwendungen, bei denen ein Objekt in seiner Lage veränderbar sein soll, verwendet werden.

Die Hubsäule kann optional oder zusätzlich in ihrem Inneren eine elektrische Platine aufweisen und der elektrische Anschluss in der Öffnung 122 der Anschlussstruktur 120 kann über ein Kabel mit der Platine in der Hubsäule verbunden sein.

Optional, zusätzlich oder alternativ kann die Hubsäule elektrisch längenverstellbar sein und der elektrische Anschluss kann ein Steueranschluss zur elektrischen Verstellung der Länge der Hubsäule sein. Beispielsweise kann dann ein Bedienpaneel oder eine Fernbedienung an den elektrischen Anschluss angesteckt werden, sodass der Nutzer über das Bedienpaneel oder die Fernbedienung die Länge der Hubsäule verändern kann.

Einige Ausführungsbeispiele beziehen sich auf eine Anschlussvorrichtung, die einen Anschluss (z. B. für IEC, RJ45 oder andere Stecker) aufweist, die zu einer Säule hinzugefügt werden können, ohne die Säule nachbearbeiten oder überarbeiten zu müssen.

Diese Anschlussvorrichtung kann an die obere und/oder untere Platte einer Säule montiert werden. Die Anschlüsse können in einer Weise platziert werden, dass sie von der Seite der Säule zugänglich sind.

Da die Anschlussvorrichtung (auch) als Zubehör verfügbar ist, kann die Säule als Standardprodukt hergestellt werden. So kann z.B. erreicht werden, dass keine zusätzlichen oder unterschiedlichen Komponenten in den Fertigungsprozess einbezogen werden müssen. Die Anschlussvorrichtung kann am Ende der Fertigungslinie oder sogar erst beim Benutzer hinzugefügt werden. Selbst wenn der Benutzer erst nach Bestellung der Säule erkennt, dass Anschlüsse (die von der Seite zugänglich sind) benötigt werden, können die später als Zubehör hinzugefügt werden. Das Zubehör kann auch nur an einem Ende der Säule oder an beiden Enden hinzugefügt werden, was es sehr flexibel macht.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichenliste

- 100: Vorrichtung zum Bereitstellen einer elektrischen oder fluiden Anschlussstelle
- 102: säulenförmiges Bauteil
- 104: Abschlussteil
- 110: Verbindungsstruktur
- 112: abgewinkelter Rand
- 114: Löcher
- 116: eine dem säulenförmigen Bauteil abgewandte Plattenebene
- 118: eine der Plattenebene abgewandte Plattenseite
- 120: Anschlussstruktur
- 122: Öffnung zum Bereitstellen eines elektrischen oder fluiden Anschlusses
- 124: Öffnung zum Durchführen einer Leitung
- 126: Seitenfläche der Anschlussstruktur

## Patentansprüche

1. Hubsäule mit einer Vorrichtung zum Bereitstellen einer elektrischen oder fluiden Anschlussstelle, wobei die Vorrichtung eine Verbindungsstruktur (110), die ausgebildet ist, sodass sie mit einem Ende eines säulenförmigen Bauteils (102) mit Hohlprofil verbindbar ist, und eine Anschlussstruktur (120) aufweist, die mit der Verbindungsstruktur (110) verbunden ist und zumindest eine Öffnung (122) zum Bereitstellen eines elektrischen oder fluiden Anschlusses für einen externen Stecker und eine weitere Öffnung (124) zum Durchführen einer von dem elektrischen oder fluiden Anschluss in das säulenförmige Bauteil (102) führenden Leitung aufweist;
wobei die Hubsäule dem säulenförmigen Bauteil (102) mit Hohlprofil entspricht und
die Vorrichtung (100) über die Verbindungsstruktur (110) mit einem Ende der Hubsäule verbunden ist, sodass sich die Anschlussstruktur (120) an einer Seitenfläche der Hubsäule befindet und sich in Richtung des anderen Endes der Hubsäule erstreckt.

2. Hubsäule gemäß Anspruch 1, wobei die Verbindungsstruktur (110) im Wesentlichen plattenförmig ist und mit einem Teil eines Randes der Platte mit der Anschlussstruktur (120) verbunden ist, wobei sich die Anschlussstruktur (120) nur in einen der beiden durch eine dem säulenförmigen Bauteil (102) abgewandte Plattenebene (116) der Verbindungsstruktur (110) definierten Halbräume erstreckt, sodass in den dem säulenförmigen Bauteil (102) abgewandten Halbraum kein Teil der Vorrichtung (100) hineinragt.

3. Hubsäule gemäß Anspruch 2, wobei die Anschlussstruktur (120) eine Seitenfläche (126) aufweist, die mit einer der Plattenebene (116) abgewandten Plattenseite (118) der Verbindungsstruktur (110) einen Winkel zwischen 80° und 100°, insbesondere 90°, einschließt.

4. Hubsäule gemäß einem der vorhergehenden Ansprüche, wobei die Verbindungsstruktur (110) zumindest teilweise abgewinkelte Ränder (112) aufweist, sodass die Vorrichtung (100) durch die abgewinkelten Ränder (112) zumindest in einer Bewegungsrichtung in seiner Position an dem Ende des säulenförmigen Bauteils (102) gehalten wird, wenn die Vorrichtung (100) über die Verbindungsstruktur (110) mit dem säulenförmigen Bauteil (102) verbunden ist.

5. Hubsäule gemäß einem der vorhergehenden Ansprüche, wobei die Verbindungsstruktur (110) und die Anschlussstruktur (120) als einstückiges Kunststoffteil ausgebildet sind oder die Verbindungsstruktur (110) ein gestanztes Metallblech und die Anschlussstruktur (120) ein mit dem gestanzten Metallblech verbundenes Kunststoffteil ist.

6. Hubsäule gemäß einem der vorhergehenden Ansprüche, wobei die Verbindungsstruktur (110) eine Kontur aufweist, die im Wesentlichen einem Querschnitt des säulenförmigen Bauteils (102) entspricht.

7. Hubsäule gemäß einem der vorhergehenden Ansprüche, wobei die Verbindungsstruktur (110) Löcher (114) aufweist, sodass ein zu tragendes Bauteil mit dem säulenförmigen Bauteil (102) mit Hilfe von durch die Löcher (114) in der Verbindungsstruktur (110) führende Verbindungsmittel verbindbar ist.

8. Hubsäule gemäß einem der vorhergehenden Ansprüche, wobei die Hubsäule in ihrem Inneren eine elektrische Platine aufweist, wobei der elektrische Anschluss in der Öffnung (122) der Anschlussstruktur (120) über ein Kabel mit der Platine in der Hubsäule verbunden ist.

9. Hubsäule gemäß einem der vorhergehenden Ansprüche, wobei die Hubsäule elektrisch längenverstellbar ist, wobei der elektrische Anschluss ein Steueranschluss zur elektrischen Verstellung der Länge der Hubsäule ist.

## Claims

1. Lifting column comprising an apparatus for providing an electrical or fluid connection point, wherein the apparatus has a connecting structure (110), which is designed such that it can be connected to one end of a column-like component (102) with a hollow profile, and has a connection structure (120) which is connected to the connecting structure (110) and has at least one opening (122) for providing an electrical or fluid connection for an external plug and has a further opening (124) for the passage of a line which leads from the electrical or fluid connection into the column-like component (102);
wherein the lifting column corresponds to the column-like component (102) with a hollow profile, and the apparatus (100) is connected to one end of the lifting column by means of the connecting structure (110), so that the connection structure (120) is located on a side surface of the lifting column and extends in the direction of the other end of the lifting column.

2. Lifting column according to Claim 1, wherein the connecting structure (110) is substantially plate-like and is connected to the connection structure (120) by a portion of an edge of the plate, wherein the connection structure (120) extends only in one of the two half-spaces which is defined by a plate plane (116) of the connecting structure (110), which plate plane is averted from the column-like component (102), so that no portion of the apparatus (100) projects into the half-space which is averted from the column-like component (102).

3. Lifting column according to Claim 2, wherein the connection structure (120) has a side surface (126) which, with a plate side (118) of the connecting structure (110), which plate side is averted from the plate plane (116), encloses an angle of between 80° and 100°, in particular 90°.

4. Lifting column according to one of the preceding claims, wherein the connecting structure (110) has at least partially angled edges (112), so that the apparatus (100) is held in its position at the end of the column-like component (102) at least in one movement direction by the angled edges (112) when the apparatus (100) is connected to the column-like component (102) by means of the connecting structure (110).

5. Lifting column according to one of the preceding claims, wherein the connecting structure (110) and the connection structure (120) are in the form of an integrally formed plastic part, or the connecting structure (110) is a stamped metal sheet and the connection structure (120) is a plastic part which is connected to the stamped metal sheet.

6. Lifting column according to one of the preceding claims, wherein the connecting structure (110) has a contour which substantially corresponds to a cross section of the column-like component (102).

7. Lifting column according to one of the preceding claims, wherein the connecting structure (110) has holes (114), so that a component which is to be supported can be connected to the column-like component (102) with the aid of connecting means which lead through the holes (114) in the connecting structure (110).

8. Lifting column according to one of the preceding claims, wherein the lifting column has an electrical printed circuit board in its interior, wherein the electrical connection in the opening (122) of the connection structure (120) is connected to the printed circuit board in the lifting column by means of a cable.

9. Lifting column according to one of the preceding claims, wherein the lifting column can be electrically longitudinally adjusted, wherein the electrical connection is a control connection for electrically adjusting the length of the lifting column.

## Revendications

1. Colonne de levage avec un dispositif de préparation d'un point de raccordement électrique ou fluidique, le dispositif présentant une structure de liaison (110) qui est constituée de telle sorte qu'elle peut être raccordée à une extrémité d'un composant (102) en forme de colonne avec un profilé creux, et une structure de raccordement (120) qui est reliée à la structure de liaison (110) et présente au moins une ouverture (122) pour la préparation d'un raccordement électrique ou fluidique pour un connecteur externe et une autre ouverture (124) pour la réalisation d'une conduite conduisant du raccordement électrique ou fluidique jusque dans le composant (102) en forme de colonne ;
la colonne de levage correspondant au composant (102) en forme de colonne avec profilé creux, et le dispositif (100) étant relié à une extrémité de la colonne de levage par le biais de la structure de liaison (110) de telle sorte que la structure de raccordement (120) se trouve sur une surface latérale de la colonne de levage et s'étend en direction de l'autre extrémité de la colonne de levage.

2. Colonne de levage selon la revendication 1, la structure de liaison (110) étant essentiellement en forme de plaque et étant reliée à la structure de raccordement (120) par une partie d'un bord de la plaque, la structure de raccordement (120) s'étendant seulement dans un des deux demi-espaces définis par un plan de plaque (116) de la structure de liaison (110) éloigné du composant (102) en forme de colonne de telle sorte qu'aucune partie du dispositif (100) ne dépasse dans le demi-espace éloigné du composant (102) en forme de colonne.

3. Colonne de levage selon la revendication 2, la structure de raccordement (120) présentant une surface latérale (126) qui forme un angle entre 80° et 100°, en particulier de 90 °, avec un côté de plaque (118) de la structure de liaison (110) éloigné du plan de plaque (116).

4. Colonne de levage selon l'une des revendications précédentes, la structure de liaison (110) présentant des bords (112) au moins partiellement coudés de telle sorte que le dispositif (100) est retenu par les bords (112) coudés dans sa position à l'extrémité du composant (102) en forme de colonne au moins dans une direction de mouvement quand le dispositif (100) est relié au composant (102) en forme de colonne par le biais de la structure de liaison (110).

5. Colonne de levage selon l'une des revendications précédentes, la structure de liaison (110) et la structure de raccordement (120) étant constituées en tant que partie en matière plastique d'un seul tenant, ou la structure de liaison (110) étant une tôle métallique découpée et la structure de raccordement (120) étant une partie en matière plastique reliée à la tôle métallique découpée.

6. Colonne de levage selon l'une des revendications précédentes, la structure de liaison (110) présentant un contour qui correspond essentiellement à une section transversale du composant (102) en forme de colonne.

7. Colonne de levage selon l'une des revendications précédentes, la structure de liaison (110) présentant des trous (114) de telle sorte qu'un composant à porter peut être relié au composant (102) en forme de colonne à l'aide de moyens de liaison conduisant à travers les trous (114) dans la structure de liaison (110).

8. Colonne de levage selon l'une des revendications précédentes, la colonne de levage présentant dans sa partie intérieure une platine électrique, le raccordement électrique dans l'ouverture (122) de la structure de raccordement (120) étant relié à la platine dans la colonne de levage par le biais d'un câble.

9. Colonne de levage selon l'une des revendications précédentes, la colonne de levage étant réglable en longueur électriquement, le raccordement électrique étant une borne de commande pour le réglage électrique de la longueur de la colonne de levage.
